# EUROPEAN PATENT SPECIFICATION

(11) **EP 0 648 428 B1**
(45) Date of publication and mention of the grant of the patent: **29.03.2000**
(21) Application number: 94115319.9
(22) Date of filing: 29.09.1994
(51) Int. Cl.: A23G 7/02, A23L 3/06, A23L 3/36

(54) **Spiral refrigerator tunnel for foodstuffs products coated with chocolate or substances of an analogous type**
Spiralförmiger Kühlungstunnel für mit Schokolade oder dergleichen beschichteten Nahrungsmitteln
Tunnel de refroidissement hélicoidale pour aliments recouvert de chocolat ou substance du même type

(30) Priority: 19.10.1993 IT UD930211
(43) Date of publication of application: 19.04.1995
(73) Proprietor: EURO CAKES S.p.A., 33034 Fagagna (UD) (IT)
(72) Inventor: Comelli, Maurizio, I-33040 Pradamano (UD) (IT); De Piccoli, Bruno, I-33033 Codroipo (UD) (IT)
(74) Representative: Petraz, Gilberto Luigi

(56) References cited:
- FR-A- 1 351 643
- US-A- 2 887 855
- US-A- 4 118 181
- US-A- 4 164 129
- US-A- 5 205 135

## Description

This invention concerns a spiral refrigerator tunnel for foodstuffs products coated with chocolate or substances of an analogous type, as set forth in the main claim.

To be more exact, the invention concerns a spiral refrigerator tunnel suitable to cool foodstuffs products coated with chocolate or substances of an analogous type in line immediately downstream of the step of partial or total pouring or coating and also suitable to discharge in line the cooled products towards the subsequent processes and/or towards the packaging machine.

In the description that follows, by "coated foodstuffs products" we shall always means foodstuffs products coated with chocolate or substances of an analogous type.

The field of production of coated foodstuffs products of the state of the art covers the problems encountered in the cooling process required to bring the coating layer to a solidified condition.

The products to be coated, immediately after having passed through the coating station, where they are lapped by a jet of coating product in the melted state or where they are dipped in a bath of the coating product, are delivered continuously or substantially continuously into a refrigerator tunnel suitable to bring the coating layer to the solid state.

When solidification of the coating layer has been completed, the coated foodstuffs products are again sent continuously or substantially continuously towards the successive processes or directly to the packaging machine.

The path of the product within the refrigerator tunnel has a length which in coordination with the speed of feed corresponds to the minimum time needed to accomplish solidification of the coating layer according to the requirements made necessary by the characteristics of the coating product.

The speed of feed through the refrigerator tunnel involves constraints linked to the speed of feed upstream and downstream of the tunnel so as not to impair the productivity of the plant.

The majority of the refrigerator tunnels employed nowadays in the field of production of coated foodstuffs products are of a linear type with a substantially horizontal development.

Owing to the above requirements of productivity and to the solidification characteristics of the substances most often employed for the coating layer, such as chocolate or analogous substances for instance, the linear refrigerator tunnels employed to produce coated foodstuffs products have very great lengths.

To keep the output of the plant high, the length of these linear tunnels may reach thirty to fifty metres or more.

This fact entails an obviously considerable size and the need to have premises of adequate dimensions.

Alternative solutions have therefore been sought to enable at least the horizontal size entailed by the refrigerator tunnels to be reduced.

In the deep-freezing field, for instance, embodiments of refrigerator tunnels have been proposed which have a vertical development with a spiral conveyor, whereby the product fed by a suitable conveyor belt, from below for instance, follows a spiral path and, when deep-freezing is complete, is discharged from the top with a suitable discharge belt.

The spiral embodiments of the state of the art employ a conveyor belt consisting of a mesh of links or a slat conveyor so as to obtain the movement of the spiral without difficulty by making use of the self-adaptation and deformation of the links or slats or else by inserting enlarged links or movable joints at certain points in the belt.

In most of the cases of the state of the art where these spiral tunnels are applied, the inclusion of belts with a discontinuous supporting surface of a perforated type or with links or meshes, etc., is acceptable.

In fact, in the technologies of the state of the art such belts not only do not create problems of carrying out the process of cooling the products but permit a movement of the belt substantially free of structural and geometric constraints and are even preferred inasmuch as they assist heat exchange within the tunnel and between the various levels of the tunnel.

For example, the prior art document US-A-4,164,129 discloses a spiral refrigerator tunnel for freezing articles, such as a wide variety of food products, comprising a freezing chamber, a spiral endless belt of conventional design disposed into the freezing chamber and belt feeder means. Food to freeze is introduced in the freezing chamber onto the endless belt and a blast of refrigerating air is directed across the multiple spiral layers of the belt where it accomplishes the freezing of the foods. This prior art document has the purpose of overcoming problems which are wholly different from those with which our invention is concerned. The endless belt comprises both rectilinear segments and circular segments and therefore it has an articulated configuration of the spiral, necessary for structural reasons, so that the configuration can adapt itself to the different speeds at the inner and outer radii of the spiral.

In fact, the beginning and end of the spiral belt do not correspond to radial positions of the spiral but include horizontal segments of a certain extent. This fact eliminates the possibility of maintaining, without self-adaptation of the meshes, constant peripheral speeds at the inner and outer rings respectively of the spiral.

US-A-5,205,135 too discloses a substantially analogous embodiment including a deep-freezing chamber with a spiral conveyor to convey the product; in this case too the technological problems which the document tackles are of a different type from the problems linked to our invention under examination, and, in particular, the problem which this document proposes to overcome is the provision of a sufficiently high percentage of humidity for the products being deep-frozen.

The spiral conveyor in this case too consists of a mesh with long straight intake and discharge segments, the spirals of the mesh surrounding a central core associated with the drive means.

The mesh-type configuration of the surface supporting the products, as can be seen in the figures and as is fully illustrated in the description, is essential for enhancing heat exchange between the various levels of the spiral.

FR-A-1.351.643 discloses a device for the cooling of sweet products such as sugared almonds and the like, which are already in a consistent non-fluid state at the time of their introduction into the cooling chamber. The conveyor of the products consists of a pair of associated spiral conveyors, both of which include an initial segment and final segment with a straight development. In this case too use is made of self-adaptation of the links forming the belt inasmuch as the products being cooled are thus not damaged by being rested on a deformable surface.

US-A-4,118,181 discloses a baking apparatus with a slotted spiral conveyor including a straight segment; these slotted spirals are also required to permit ventilation.

US-A-2,887,855 too discloses a conveyor with straight segments which consists of a mesh able to expand and contract so as to adapt itself to the differences in peripheral speed of the inner and outer peripheries of the belt.

But all these embodiments have been found unsuitable for use with coated foodstuffs products of the type with which this invention is concerned and especially with products coated with chocolate or analogous substances. In fact, the product leaving the coating station has a substantially fluid coating layer, and this leads to problems during the path through a refrigerator tunnel with a conveyor belt of links or a slat conveyor.

These problems include the dripping of the coating product below the links of the conveyor, the formation of ragged edges and especially the difficulty of removing the solidified product from the links or slats of the conveyor belt at the exit of the refrigerator tunnel and impair the finished surface quality of the coated product.

In fact, during the step of transfer into the refrigerator tunnel the coating layer, which is still fluid at the entry, may penetrate into the links of the mesh or between the slats and, when solidified, may become jammed or stick to the links or slats, thus preventing free movement of one link in relation to another and becoming a solid part of the belt.

This is a problem which happens also in linear refrigerator tunnels in which the modest length, made necessary for space reasons for instance, entails a cooling time which is not always enough and therefore entails adhesion of the incompletely solidified coating layer to the conveyor belt.

Partial removal of the coating layer may thus occur and make the finished product unacceptable from a quality point of view.

The present applicants have therefore tackled the problem of embodying a refrigerator tunnel that overcomes the problems of overall bulk encountered in the state of the art and is especially suitable for application to coated foodstuffs products, and they have designed, tested and embodied this invention to overcome those problems and to achieve further advantages.

This invention is set forth and characterised in the main claim, while the dependent claims describe variants of the idea of the main embodiment.

The purpose of the invention is to provide a vertically extending refrigerator tunnel which is especially suitable for the production of coated foodstuffs products, especially products coated with chocolate or substances of an analogous type.

Another purpose of the invention is to employ within the refrigerator tunnel a conveyor belt which follows a spiral path and consists of a belt with a smooth endless supporting surface without holes or openings or spaces passing through the belt..

Yet another purpose of the invention is to be able to use either a convection cooling system or a direct cooling system, for instance when the coating products possess solidification properties which lend themselves better to one type of cooling rather than the other.

A still further purpose is to be able to determine separate cooling zones along the cooling path within the refrigerator tunnel.

The spiral refrigerator tunnel according to the invention in a line to produce coated foodstuffs products is located immediately downstream of the coating station.

The coated products with the coating layer still substantially in a fluid state are fed automatically from the coating station by a feeder conveyor belt to the conveyor belt of the refrigerator tunnel.

The solidification of the coating layer having been accomplished in the refrigerator tunnel, the coated products are then fed automatically to the removal conveyor belt, which conveys the coated products towards possible successive processing stations or towards the packaging machine.

The feeder and removal belts consist of substantially horizontal segments positioned outside the refrigerator tunnel; these segments cooperate with the spiral belt at a radial position thereof which is chosen as required. In other words, the spiral belt does not contain straight segments cooperating with the feeder and removal belts, since its beginning or loading edge and end or delivery edge are located so as to coincide substantially with the intake and outlet doors of the refrigerator tunnel at desired segments of its coils at its lower and upper levels respectively, these desired segments being placed radially.

According to the invention the conveyor belt for the products within the refrigerator tunnel consists of an endless belt of a strong and at least partly resilient material such as cloth or a plastic or composite material conformed as a double spiral and having a smooth endless supporting surface.

The endless belt conformed as a double spiral is embodied by starting with a determined plurality of equal circular rings cut radially at a point and glued together at that point so as to form a continuous spiral. The number and size, or average radius, of the circular rings employed depend on the length and width desired or necessary for the cooling path within the refrigerator tunnel.

Thus the inner and outer diameters of the individual spiral depend, in fact, on the inner and outer diameters of the spiral conveyor.

The length of the cooling path depends on the solidification properties of the coating product and on the speeds of upstream delivery to, and downstream removal from, the refrigerator tunnel. This length determines the number of circular rings which are assembled.

As said above, in the step of preparing the two-spiral endless belt the circular rings are cut radially; the cut ends are offset from each other in the vertical direction and are joined respectively to the cut ends of the circular rings forming the next higher level and next lower level of the endless belt, and so on.

Two opened equal spirals are thus prepared to provide an upward path and a downward path of the endless belt and are joined together at their ends.

One of these two spirals, which are exchanged continuously during working, forms the upward feeder path for the products in the refrigerator tunnel, whereas the other spiral forms the return path of the endless belt to its starting position.

The two-spiral conveyor belt is firmly associated with drawing means throughout its whole length both on its inner side and its outer side as defined in relation to the centre of the spiral.

These drawing means consist, for instance, of two-link endless chains, which are driven by sprocket wheels arranged on the inner side and outer side of the refrigerator tunnel according to the invention along the whole path of the conveyor belt. These endless chains also have the task of radial tensioning of the endless belt.

In particular, there are included a first motion-transmission system cooperating with the chain associated with the outer side of the spiral and a second motion-transmission system cooperating with the chain associated with the inner side of the spiral.

The inclusion of two separate motion-transmission systems associated with the inner and outer sides of the spiral belt is advantageous inasmuch as the spiral belt according to the invention cannot be deformed and adapt itself on the basis of the difference of peripheral speed as between the inner and outer sides.

With the two motion-transmission systems, the actuation of which is suitably correlated and is suitable to induce different speeds able to compensate the different distance of the inner ring and outer ring from the centre, the spiral belt can be caused to move without deformation, thus obtaining a forward motion which at every radial point corresponds in fact to a straight forward motion.

Each motion-transmission system may comprise a plurality of sprocket wheel assemblies arranged circumferentially and advantageously symmetrically so as to apportion and distribute the drawing stress of the drawing chains of the endless belt and to prevent the so-called "throttling" closure of the chains towards the centre of the conveyor.

The sprocket wheel assemblies include also resilient clutch means associated with each sprocket wheel.

If the chains are driven by one single source of motion,the two systems to transmit the motion are correlated and associated by speed reduction units so as to determine and keep under control the difference between the induced peripheral speeds of the outer chain and inner chain.

According to a preferred embodiment of the invention the chains are gauged, link by link, so as to avoid problems of loss of step, which in view of the great length of the cooling path could cause even considerable excursions as the conveyor belt is moved towards its outlet.

According to a variant, the endless belt is associated, instead of chains, with specially shaped strips of a resilient material, rubber for instance, which are drawn forwards by powered rolls.

According to the invention the endless belt, at least in its upward path, is associated on its lower side with a closed and advantageously insulated cooling jacket.

The cooling jacket includes at least one delivery intake for a cooling fluid and at least one aspiration outlet for the cooling fluid so as to form a circuit for circulation of the cooling fluid.

According to a preferred embodiment of the invention a plurality of separate cooling zones to take account of the requirements and properties of solidification of the coating products are defined along the cooling path.

In fact, so as to prevent great thermal stresses on the coating product during its cooling step, it is advantageous that the temperatures at least in the first and last segments in the refrigerator tunnel should not be very different from the temperature outside the refrigerator tunnel.

The endless spiral conveyor belt together with the means to deliver and transmit motion is located within a cabinet of steel sheet, which has insulated sidewalls and is equipped with doors to permit entry for maintenance, replacement of parts, washing, etc.

The attached figures are given as a non-restrictive example and show a preferred embodiment of the invention as follows:-
- Fig.1: shows a partial diagrammatic side view of a section of the line to produce foodstuffs products by using the spiral refrigerator tunnel according to the invention;
- Fig.2: is a plan view of the production line of Fig.1;
- Fig.3: shows in an enlarged scale a section of a part of the refrigerator tunnel according to the invention;
- Fig.4: shows in an enlarged scale a detail of the motion-transmission system of the belt according to the invention;
- Fig.5: shows a variant of Fig.4;
- Fig.6: shows a possible system for the transmission of motion within the refrigerator tunnel according to the invention.

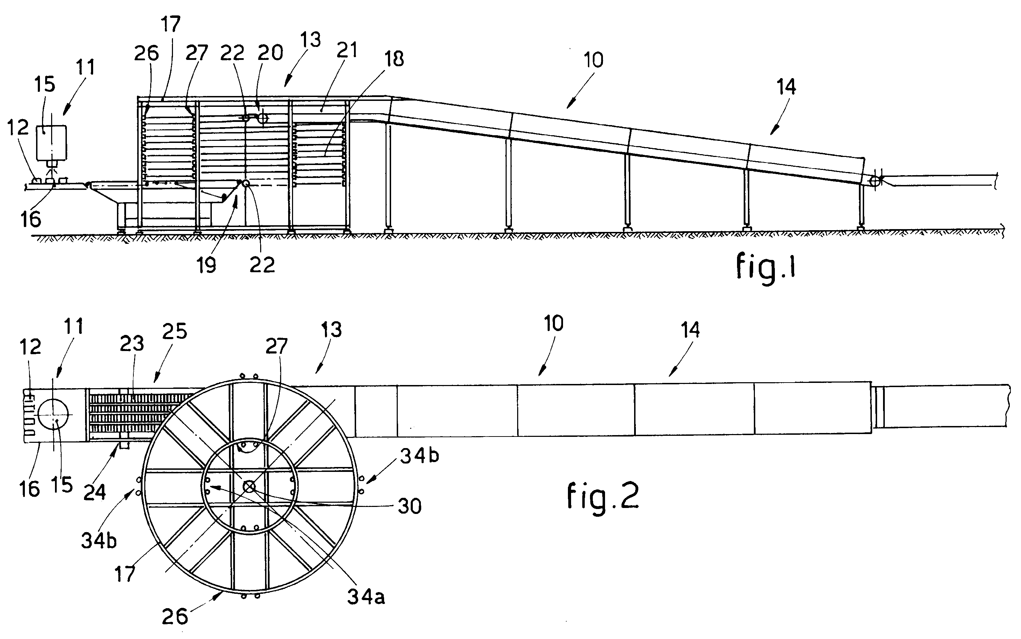

A line 10 to produce coated foodstuffs products is shown partly in Figs.1 and 2 and comprises at least one station 11 to coat or pour the products 12, a station 13 for solidification of the coating layer and a removal station 14.

The coated foodstuffs products 12 are sent from the removal station 14 towards the subsequent processes or directly to a packaging machine.

The coating or pouring station 11 includes in this case a tank 15 for delivery of a coating product in a melted state, by means of which the products 12 passing along a feeder conveyor belt 16 are lapped by a jet of coating product.

The products 12 are sent from the coating or pouring station 11 substantially continuously into a refrigerator tunnel 17.

According to the invention the refrigerator tunnel 17 has a circular conformation with an endless conveyor belt 18 conformed as a double spiral with its supporting surface smooth and continuous and not perforated.

The products 12 are transferred by the feeder conveyor belt 16 to the endless spiral conveyor belt 18 at a first transfer zone 19 and then follow the spiral path with an upward development to a second transfer zone 20, where they are delivered to a removal conveyor belt 21.

The first and second transfer zones 19-20 form the zones of a change of direction of the endless conveyor belt 18 and include transmission rolls 22 which accomplish this change of direction.

The transmission rolls 22 have a very small diameter so as to carry out a sharp change of direction, which enables the products 12 to be transferred efficiently from one supporting surface to the other in view of the properties of the products 12 themselves.

The transfer zones 19-20 or zones of the beginning and end of the endless conveyor belt 18 are always in a position selected as desired and radial to the centre at that point of the spiral.

In other words, the feeder belt 16 and the removal belt 21, which consist of substantially horizontal conveyor segments, cooperate respectively and directly with interrupted segments of the lower coil and upper coil of the endless conveyor belt 18, which does not include in itself horizontal segments provided to coincide with the transfer zones 19-20 of the products 12.

In this case the feeder belt 16 consists, at least at its end segment, of four straps 23 moving at different linear speeds which increase from the inner side 24 to the outer side 25.

This condition is necessary to adapt the speed of the passage of the products 12, which have their coating layer still substantially in a melted state, to the peripheral speed of the endless spiral belt 18, this speed being greater at its outer side 26 than at its inner side 27.

In fact, a great difference of speed between the feeder belt 16 and endless spiral belt 18 in the transfer step could cause sliding of the coating product and thus make the coating unacceptable from a quality point of view.

This contrivance is not necessary during transfer to the removal conveyor belt 21 inasmuch as the coating product is by then in a solid state.

The feeder belt 16 cooperates advantageously with heating means, which are not shown here, to prevent undesired solidification of part of the coating product possibly poured onto the straps 23, which could entail the above problems of sticking.

The outer 26 and inner 27 sides of the endless spiral belt 18 are associated along their whole length with drawing chains 28, which are respectively an inner chain 28a and outer chain 28b.

A plurality of hooks 29 are welded to the the drawing chains 28 in this case, and the endless spiral belt 18 is firmly secured at its two sides to the hooks 29.

The drawing chains 28 run along the whole upward and return lengths of the refrigerator tunnel 17 within guides 31, which are advantageously embodied with a section consisting of an anti-friction material.

These guides 31 include, at a plurality of circumferentially arranged points, openings 32 which enable the drawing chains 28 to cooperate with assemblies 34 of sprocket wheels that transmit motion.

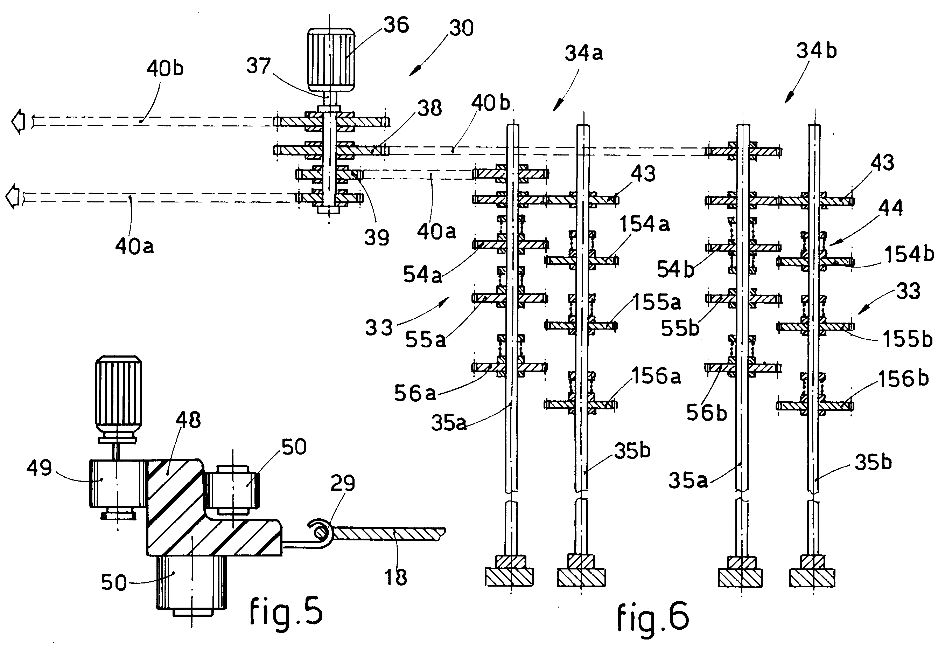

The system of transmission of motion with one single source of motion 30 is shown diagrammatically in Fig.6. In this case at least one first assembly 34a of sprocket wheels 33 associated with the inner chain 28a and therefore positioned on the inner side of the refrigerator tunnel 17 and at least one second assembly 34b of sprocket wheels 33 associated with the outer chain 28b and therefore positioned on the outer side of the refrigerator tunnel 17 according to the invention are included; these assemblies 34a-34b are also shown diagrammatically in Fig.2.

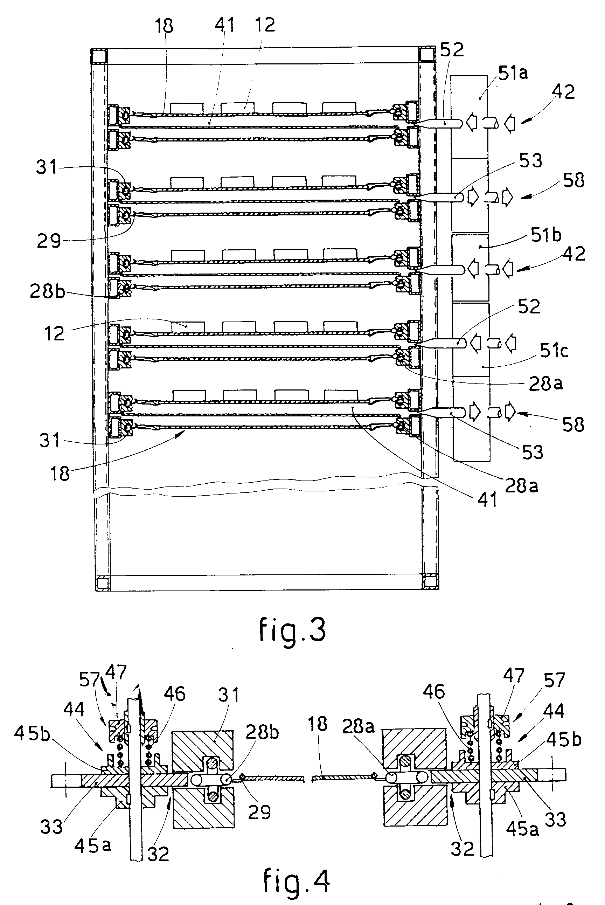

Each assembly 34 includes two shafts 35, to each of which a plurality of coaxial sprocket wheels 33 are keyed. The coaxial sprocket wheels 33 mesh with the respective drawing chains 28a-28b as shown in Fig.4.

In this case the first shaft associated with the upward path of the endless spiral belt 18 is referenced with 35a, whereas the second shaft associated with the return path of the endless spiral belt 18 is referenced with 35b.

The shafts 35a and 35b are caused to contrarotate in relation to each other by the introduction of a pair of coaxial sprocket wheels 43 cooperating with each other, one of these sprocket wheels 43 per each shaft 35a-35b.

In the embodiment of Fig.6, in which the source of motion 30 is placed at the centre of the refrigerator tunnel 17, the shafts 35 of each assembly 34 of sprocket wheels 33 are shown side by side for ease of illustration. In actual fact the shafts 35a-35b of each assembly 34 of sprocket wheels 33 are positioned on the same circumference; and the assembly 34a cooperates with the inner side 27 of the endless spiral belt 18, while the assembly 34b cooperates with the outer side 26 of the endless spiral belt 18 (Fig.2).

According to the invention the number of pre-arranged coaxial sprocket wheels 33 is the same as the number of the levels of the refrigerator tunnel 17.

The example of Fig.6 shows sprocket wheels 33 for three levels of upward movement and for the respective three levels of return movement of the endless spiral belt 18.

For the segment of upward movement of the endless spiral belt 18, in particular, the inner sprocket wheel of the third level 54a cooperates with the outer sprocket wheel of the third level 54b; the inner sprocket wheel of the second level 55a cooperates with the outer sprocket wheel of the second level 55b, and likewise 56a cooperates with 56b.

Likewise, in the return downward segment of the endless spiral belt 18 the inner sprocket wheel 154a cooperates with the outer sprocket wheel 154b, the sprocket wheel 155a with 155b and the sprocket wheel 156a with 156b.

Moreover, according to the invention pluralities of assemblies of inner sprocket wheels 34a and of outer sprocket wheels 34b are included and are connected together kinematically, for instance, by suitable transmission systems so as to distribute and apportion the drawing load.

In this case the source of motion 30 includes a motor 36 and a transmission shaft 37, to which are keyed at least two sprocket wheels 38 and 39, which transmit motion through respective chains 40b and 40a to the respective outer 34b and inner 34a assemblies of sprocket wheels 33.

The sprocket wheels 38 and 39 have a precise reduction ratio so as to determine and keep under control the peripheral speeds of the outer side 26 and inner side 27 of the endless spiral belt 18 according to the width of that belt 18 so as to ensure the same peripheral speed of the inner 28a and outer 28b chains.

In this case the sprocket wheels 33 mesh with the openings 32 in the guides 31 and cause the drawing action of the respective chains 28.

According to a preferred embodiment of the invention other sprocket wheels 38 and 39 associated with transmission chains 40a and 40b can be keyed to the transmission shaft 37 so as to provide motion for analogous assemblies 34a and 34b of sprocket wheels arranged circumferentially and advantageously symmetrically, on the inner side and outer side respectively, in relation to the refrigerator tunnel 17 according to the invention.

The sprocket wheels 33 cooperate with clutch means 44. In this case (Fig.4) the clutch means 44 consist of a pair of plates 45 fitted coaxially with the sprocket wheel 33, namely a lower plate 45a and an upper plate 45b.

The lower plate 45a is immovably fitted to the shaft 35, whereas the upper plate 45b is thrust resiliently against the sprocket wheel 33 owing to the action of a spring 46.

The value of the compression of the spring 46 against the upper plate 45b and therefore the thrust of the clutch 44 can be altered by adjusting the position of a threaded bush 47, which comprises a surface 57 for cooperation with a screwing tool.

According to the variant of Fig.5 the endless spiral belt 18 is associated on both its sides 26-27 by means of hooks 29 with specially shaped strips 48 of a resilient material, which are driven forwards by at least one powered roll 49 and idler rolls 50.

The refrigerator tunnel 17 can be associated with a convection cooling system.

According to a preferred embodiment of the invention the endless spiral conveyor belt 18, at least along its upward segment where it is conveying products with their coating layer still to be solidified, cooperates at its lower part with an advantageously insulated cooling jacket 41 into which a cooling fluid is delivered.

The cooling jacket 41 cooperates with fluid delivery intake means 42 and fluid aspiration outlet means 58 located in a cooling chamber 51.

According to a preferred embodiment of the invention a plurality of separate cooling zones having different cooling temperatures are included along the cooling path in the refrigerator tunnel 17. This is the case because under given circumstances it may be convenient for the temperature at the inlet and outlet of the refrigerator tunnel 17 not to be very different from the temperature outside the refrigerator tunnel 17 so as to avoid creating heavy thermal stresses on the coated product 12.

In this case there are three separate zones; namely 51a, 51b and 51c respectively, each of which includes a cooling fluid intake 52 for the insulated jacket 41 and a relative fluid outlet 53 so as to create a closed circuit with the relative cooling chamber 51. The cooling jackets 41 contain typically within themselves switch means (not shown here) to guide the flow of the cooling fluid and to make uniform the action of cooling the coated foodstuffs products 12.

## Claims

1. Spiral refrigerator tunnel for products that have just been coated with chocolate or substances of an analogous type, which is positionable downstream of a coating or pouring station (11) and upstream of a removal station (14), said refrigerator tunnel (17) comprising an endless belt (18) wound in a spiral path, refrigeration means disposed along said spiral path, first conveying means (16) for conveying said products (12) from said coating or pouring station (11) towards said endless belt (18) and second conveying means (21) for conveying said products (12) from said endless belt (18) towards said removal station (14), said endless belt (18) comprising an outward segment to convey the products (12) from said first conveying means (16) to said second conveying means (21), and a return segment joined to said outward segment and disposed from said second conveying means (21) to said first conveying means (16), said endless belt (18) cooperating with two roller means (22) disposed at the ends of said double spiral to accomplish the change of direction of said endless belt (18) from said outward segment to said return segment and vice versa, said roller means (22) being disposed near to said first conveying means (16) and respectively to said second conveying means (21), said refrigerator tunnel (17) being characterised in that said endless belt (18) is formed by a plurality of circular rings of flexible cloth, plastic or composite material, cut and joined together so as to form a plurality of coils according to a double spiral having the same geometric parameters of the spiral of the tunnel, the belt (18) having a smooth supporting surface without holes or openings for supporting said products (12), the endless belt (18) having its loading edge and delivery edge in a selected radial position with respect to the vertical axis of the spiral and defined in a desired position in its lower level and upper level coils respectively.

2. Refrigerator tunnel as in Claim 1, in which said endless belt (18) cooperates along the whole length of the inner (27) and outer (26) sides of its double spiral with relative separate substantially radial tensioning and drawing means.

3. Refrigerator tunnel as in Claim 2, in which said radial tensioning and drawing means consist of crossed-link endless chains, namely an inner chain (28a) and an outer chain (28b) respectively, which are connected laterally to said endless belt (18) along the whole length thereof (18).

4. Refrigerator tunnel as in Claim 3, in which said endless chains (28) are gauged, link by link.

5. Refrigerator tunnel as in claim 2, in which motion transmission means (34) to transmit motion are included at least at a plurality of circumferential points of said outer side (26) and inner side (27) of said endless belt (18).

6. Refrigerator tunnel as in claim 5, in which said motion transmission means comprise separate means (34a-34b) associated respectively with said inner (27) and outer (26) sides of said endless belt (18), said separate means (34a-34b) inducing differentiated speeds coordinated functionally with the radial excursion as between the inner radius and outer radius of said double spiral.

7. Refrigerator tunnel as in claim 5, in which said motion transmission means (34) comprise a pair of kinematically connected contrarotating shafts (35), a first shaft (35a) of said pair being associated with said outward segment of said endless belt (18), while the other shaft (35b) of said pair is associated with said return segment of said endless belt (18).

8. Refrigerator tunnel as in claim 7, in which each motion transmission shaft (35) is associated with a plurality of coaxial sprocket wheels (33), the number of said coaxial sprocket wheels (33) being equal to the number of coils of said spiral path.

9. Refrigerator tunnel as in claim 8, in which each coaxial sprocket wheel (33) is associated with adjustable clutch means (44).

10. Refrigerator tunnel as in claims 3 and 8, in which said sprocket wheels (33) cooperate with said radial tensioning means (28) in the movement of said endless belt (18).

11. Refrigerator tunnel as in claim 6, in which said separate means (34a-34b) cooperate with one single source (30) of motion, speed reduction means (38-39) being included and being suitable to define a speed of said inner side (27) functionally correlated with the speed of said outer side (26) of said endless belt (18).

12. Refrigerator tunnel as in any claim hereinbefore, in which at least said outward segment of said endless belt (18) cooperates with closed and insulated cooling jacket means (41).

13. Refrigerator tunnel as in claim 12, in which said cooling jacket (41) cooperates with means (52) to deliver cooling fluid and with means (53) to aspirate cooling fluid.

14. Refrigerator tunnel as in any claim hereinbefore, which includes along said spiral path cooling zones (51a-51b-51c) having differentiated temperatures.

15. Refrigerator tunnel as in Claim 2, in which said radial tensioning and drawing means consist of shaped strips (48) consisting of a resilient material and connected sideways to said endless spiral belt (18) at said inner (27) and outer (26) sides thereof (18).

16. Refrigerator tunnel as in Claim 15, in which said shaped strips (48) are associated with drive means comprising at least one powered roll (49).

## Patentansprüche

1. Spiralförmiger Kühltunnel für zuvor mit Schokolade oder Substanzen analoger Art beschichtete Produkte, der stromab einer Beschichtungs- oder Übergießungsstation (11) und stromauf einer Abtransportierungsstation (14) angeordnet werden kann, wobei der Kühltunnel (17) ein Endlosband (18) aufweist, das in einem wendelförmigen Weg gewunden ist, ein entlang des wendelförmigen Weges angeordnetes Kühlmittel, sowie ein erstes Fördermittel (16), um die Produkte (12) von der Beschichtungs oder Übergießungsstation (11) in Richtung des Endlosbandes (18) zu fördern, und ein zweites Fördermittel (21), um die Produkte (12) von dem Endlosband (18) in Richtung der Abtransportierungsstation (14) zu fördern, wobei das Endlosband (18) einen äußeren Abschnitt zur Förderung der Produkte (12) von dem ersten Fördermittel (16) zu dem zweiten Fördermittel (21) und einen mit dem äußeren Abschnitt verbundenen und von den zweiten Fördermitteln (21) zu dem ersten Fördermittel (16) angeordneten Rückkehrabschnitt aufweist, wobei das Endlosband (18) mit zwei Rollenmitteln zusammenarbeitet (22), die an den Enden der Doppelwendel angeordnet sind, um die Richtungsänderung des Endlosbandes (18) von dem äußeren Abschnitt zu dem Rückkehrabschnitt und umgekehrt auszuführen, und die Rollenmittel (22) nahe zu dem ersten Fördermittel (16) beziehungsweise zu dem zweiten Fördermittel (21) angeordnet sind, und der Kühltunnel (17)
dadurch gekennzeichnet ist, dass das Endlosband (18) aus einer Vielzahl von kreisförmigen Ringen aus einem flexiblen Stoff, Kunststoff oder einem zusammengesetzten Material geformt ist, welche zerschnitten und derart zusammengefügt sind, dass sie eine Vielzahl von Windungen gemäß einer Doppelwendel bilden, mit den selben geometrischen Parametern wie die Wendel des Tunnels, wobei das Band (18) eine glatte Auflagefläche ohne Löcher und Öffnungen zum Transport der Produkte (12) aufweist, und das Endlosband (18) seine Beladungskante und Entladungskante an einer ausgewählten radialen Position in Bezug auf die vertikale Achse der Wendel und definiert in einer gewünschten Position in den unten bzw. oben gelegenen Windungen aufweist.

2. Kühltunnel nach Anspruch 1, bei welchem das Endlosband (18) über die gesamte Länge der Innenseite (27) und der Außenseite (26) seiner Doppelwendel mit zughörigen, getrennten, im wesentlichen radialen Spannungs- und Ziehmitteln zusammenarbeitet.

3. Kühltunnel nach Anspruch 2, bei welchem die radialen Spannungs- und Ziehmittel aus Endlosketten mit querverbundenen Gliedern bestehen, nämlich einer inneren Kette (28a) beziehungsweise einer äußeren Kette (28b), die seitlich mit dem Endlosband (18) über dessen gesamte Länge verbunden sind.

4. Kühltunnel nach Anspruch 3, bei welchem die Ketten (28) Glied für Glied justiert sind.

5. Kühltunnel nach Anspruch 2, in welchem Bewegungsübertragungsmittel (34) zur Übertragung von Bewegung zumindest an einer Vielzahl von Umfangspunkten der äußeren Seite (26) und der inneren Seite (27) des Endlosbandes (18) vorgesehen sind.

6. Kühltunnel nach Anspruch 5, bei welchem die Bewegungsübertragungsmittel getrennte Mittel (34a-34b) aufweisen, die der Innenseite (27) beziehungsweise der Außenseite (26) des Endlosbandes (18) zugeordnet sind, wobei diese getrennten Mittel (34a-34b) unterschiedliche, mit der radialen Abweichung zwischen dem inneren und dem äußeren Radius der Doppelwendel funktionell koordinierte Geschwindigkeiten bewirken.

7. Kühltunnel nach Anspruch 5, bei welchem die Bewegungsübertragungsmittel (34) ein Paar kinematisch verbundener, gegensinnig rotierender Wellen (35) aufweisen, wobei eine erste Welle (35a) des Paares dem äußeren Abschnitt des Endlosbandes (18) zugeordnet ist, wogegen die andere Welle (35b) des Paares dem Rückkehrabschnitt des Endlosbandes (18) zugeordnet ist.

8. Kühltunnel nach Anspruch 7, bei welchem jede Bewegungsübertragungswelle (35) einer Vielzahl von koaxialen Zahnrädern (33) zugeordnet ist, wobei die Anzahl der koaxialen Zahnräder (33) gleich der Anzahl der Windungen des wendelförmigen Weges ist.

9. Kühltunnel nach Anspruch 8, bei welchem jedes koaxiale Zahnrad (33) mit einem justierbaren Kupplungsmittel (44) verbunden ist.

10. Kühltunnel nach den Ansprüchen 3 und 8, bei welchem die Zahnräder (33) mit den radialen Spannungsmitteln (28) bei der Bewegung des Endlosbandes (18) zusammenarbeiten.

11. Kühltunnel nach Anspruch 6, bei welchem die getrennten Mittel (34a-34b) mit einer einzelnen Antriebsquelle (30) zusammenarbeiten, wobei Geschwindigkeitsreduktionsmittel (38-39) vorgesehen sind, um eine funktionell der Geschwindigkeit der Außenseite (26) des wendelförmigen Bandes entsprechende Geschwindigkeit der Innenseite (27) festzulegen.

12. Kühltunnel nach einem der vorhergehenden Ansprüche, bei welchem zumindest der äußere Abschnitt des Endlosbandes (18) mit einem geschlossenen und isolierten Kühlmantelmittel (41) zusammenwirkt.

13. Kühltunnel nach Anspruch 12, bei welchem der Kühlmantel (41) mit Mitteln (52) zum Einspeisen eines Kühlfluids und mit Mitteln (53) zum Absaugen des Kühlfluids zusammenwirkt.

14. Kühltunnel nach einem der vorhergehenden Ansprüche, welcher entlang des wendelförmigen Weges Kühlzonen (51a-51b-51c) mit unterschiedlicher Temperatur aufweist.

15. Kühltunnel nach Anspruch 2, bei welchem die radialen Spannungs- und Ziehmittel aus geformten Streifen (48) bestehen, die aus einem dehnbaren Material bestehen und seitlich mit dem Endlosband (18) an dessen Innen- (27) und Außenseite (26) verbunden sind.

16. Kühltunnel nach Anspruch 15, bei welchem der geformte Streifen (48) mit Antriebsmitteln verbunden ist, die zumindest eine angetriebene Rolle (49) aufweisen.

## Revendications

1. Tunnel réfrigérant hélicoïdal pour des produits qui viennent juste d'être enrobés de chocolat ou de substances d'un type analogue, lequel est positionnable en aval d'un poste de revêtement ou de versement (11) et en amont d'un poste d'enlèvement (14), ledit tunnel réfrigérant (17) comprenant une courroie sans fin (18) enroulée en un trajet hélicoïdal, un moyen de réfrigération disposé le long dudit trajet hélicoïdal, un premier moyen de transport (16) pour transporter lesdits produits (12) depuis ledit poste de revêtement ou de versement (11) vers ladite courroie sans fin (18) et un second moyen de transport (21) pour transporter lesdits produits (12) depuis ladite courroie sans fin (18) vers ledit poste d'enlèvement (14), ladite courroie sans fin (18) comprenant un segment externe pour transporter les produits (12) depuis ledit premier moyen de transport (16) vers ledit second moyen de transport (21), et un segment de retour raccordé audit segment externe et disposé depuis ledit second moyen de transport (21) vers ledit premier moyen de transport (16), ladite courroie sans fin (18) coopérant avec deux moyens de rouleau (22) disposée aux extrémités de ladite double hélice pour accomplir le changement de direction de ladite courroie sans fin (18) depuis ledit segment externe vers ledit segment de retour et vice versa, ledit moyen de rouleau (22) étant disposé à proximité dudit premier moyen de transport (16) et respectivement dudit second moyen de transport (21), ledit tunnel réfrigérant (17) étant caractérisé en ce que ladite courroie sans fin (18) est formée par une pluralité d'anneaux circulaires d'un matériau flexible composite, plastique ou de tissu, découpés et raccordés ensemble de façon à former une pluralité d'enroulements en conformité avec une double hélice ayant les mêmes paramètres géométriques que l'hélice du tunnel, la courroie (18) ayant une surface de support uniforme dépourvue de trous ou d'ouvertures pour supporter lesdits produits (12), la courroie sans fin (18) ayant son bord de chargement et son bord de délivrance dans une position radiale sélectionnée par rapport à l'axe vertical de l'hélice et définie dans une position désirée dans ses enroulements de niveau inférieur et de niveau supérieur respectivement.

2. Tunnel réfrigérant selon la revendication 1, dans lequel ladite courroie sans fin (18) coopère le long de la longueur entière des côtés interne (27) et externe (26) de sa double hélice avec des moyens de tension et de traction relatifs séparés sensiblement radiaux.

3. Tunnel réfrigérant selon la revendication 2, dans lequel lesdits moyens de tension et de traction radiaux sont constitués de chaînes sans fin articulées, à savoir une chaîne interne (28a) et une chaîne externe (28b), respectivement, qui sont connectées latéralement à ladite courroie sans fin (18) le long de sa longueur entière.

4. Tunnel réfrigérant selon la revendication 3, dans lequel lesdites chaînes sans fin (28) sont calibrées, maillon par maillon.

5. Tunnel réfrigérant selon la revendication 2, dans lequel des moyens de transmission de mouvement (34) pour transmettre le mouvement sont inclus au niveau d'au moins une pluralité de points circonférenciels dudit côté externe (26) et dudit côté interne (27) de ladite courroie sans fin (18).

6. Tunnel réfrigérant selon la revendication 5, dans lequel lesdits moyens de transmission de mouvement comprennent des moyens séparés (34a et 34b) associés respectivement auxdits côtés interne (27) et externe (26) de ladite courroie sans fin (18), lesdits moyens séparés (34a et 34b) induisant des vitesses différenciées coordonnées fonctionnellement avec l'excursion radiale comme entre le rayon interne et le rayon externe de ladite double hélice.

7. Tunnel réfrigérant selon la revendication 5, dans lequel lesdits moyens de transmission de mouvement (34) comprennent une paire d'arbres (35) tournant mutuellement en sens inverse accouplés cinématiquement, un premier arbre (35a) de ladite paire étant associé audit segment extérieur de ladite courroie sans fin (18), tandis que l'autre arbre (35b) de ladite paire est associé audit segment de retour de ladite courroie sans fin (18).

8. Tunnel réfrigérant selon la revendication 7, dans lequel chaque arbre de transmission de mouvement (35) est associé à une pluralité de pignons à chaîne coaxiaux (33), le nombre desdits pignons à chaînes coaxiaux (33) étant égal au nombre des enroulements dudit trajet hélicoïdal.

9. Tunnel réfrigérant selon la revendication 8, dans lequel chaque pignon à chaîne coaxial (33) est associé à un moyen d'embrayage ajustable (44).

10. Tunnel réfrigérant selon les revendications 3 et 8, dans lequel lesdits pignons à chaîne (33) coopèrent avec ledit moyen de tension radial (28) dans le déplacement de ladite courroie sans fin (18).

11. Tunnel réfrigérant selon la revendication 6, dans lequel lesdits moyens séparés (34a et 34b) coopèrent avec une seule source (30) de mouvement, des moyens de réduction de vitesse (38 et 39) étant inclus et étant appropriés pour définir une vitesse dudit côté interne (27) fonctionnellement corrélée avec la vitesse dudit côté externe (26) de ladite courroie sans fin (18).

12. Tunnel réfrigérant selon l'une quelconque des revendications précédentes, dans lequel au moins ledit segment externe de ladite courroie sans fin (18) coopère avec un moyen d'enveloppe de refroidissement fermé et isolé (41).

13. Tunnel réfrigérant selon la revendication 12, dans lequel ladite enveloppe de refroidissement (41) coopère avec des moyens (52) pour délivrer le fluide de refroidissement et avec des moyens (53) pour aspirer le fluide de refroidissement.

14. Tunnel réfrigérant selon l'une quelconque des revendications précédentes, lequel inclut le long dudit trajet hélicoïdal des zones de refroidissement (51a, 51b, 51c) ayant des températures différenciées.

15. Tunnel réfrigérant selon la revendication 2, dans lequel lesdits moyens de tension et de traction radiaux sont constitués de brides formées (48) comprenant un matériau élastique et connectées latéralement à ladite courroie hélicoïdale sans fin (18) au niveau desdits côtés interne (27) et externe (26) de celle-ci.

16. Tunnel réfrigérant selon la revendication 15, dans lequel lesdites brides formées (48) sont associées à des moyens d'entraînement comprenant au moins un rouleau actionné mécaniquement (49).
